Europäisches Patentamt

European Patent Office

Office européen des brevets

(11) Veröffentlichungsnummer: **0 419 967 A1**

## (12) EUROPÄISCHE PATENTANMELDUNG

(21) Anmeldenummer: **90117731.1**

(22) Anmeldetag: **14.09.90**

(51) Int. Cl.⁵: **B65D 83/00**

(30) Priorität: **27.09.89 DE 3932165**

(43) Veröffentlichungstag der Anmeldung:
**03.04.91 Patentblatt 91/14**

(84) Benannte Vertragsstaaten:
**AT BE CH DE DK ES FR GB GR IT LI LU NL SE**

(71) Anmelder: **von Schuckmann, Alfred**
**Kervendonk 63**

**W-4178 Kevelaer 2(DE)**

(72) Erfinder: **von Schuckmann, Alfred**
**Kervendonk 63**
**W-4178 Kevelaer 2(DE)**

(74) Vertreter: **Müller, Enno et al**
**Rieder & Partner Corneliusstrasse 45**
**W-5600 Wuppertal 11(DE)**

(54) **Spender.**

(57) Die Erfindung betrifft einen Spender zur portionierten Ausgabe pastöser Massen oder dergleichen, mit einem rohrartigen Gehäuse (3), einem Druckboden (17) und einem außerhalb desselben angeordneten Transportteil (4) zum Transport der in einem Kartuschensack (2) befindlichen pastösen Masse (1) in Richtung der Ausgabeöffnung (9), wobei der Druckboden (17) mindestens ein Transportklinkenteil (20) aufweist, das einerseits mit einer an dem Gehäuse (3) ausgebildeten, axial verlaufenden Zahnleiste (23) und andererseits mit einer an dem Transportteil (4) ausgebildeten, gleichfalls axial verlaufenden Zahnleiste (24) zusammenwirkt, wobei weiter das Transportteil (4) gegen eine Federkraft (Rückholfeder 40) relativ zu dem Gehäuse (3) axial verlagerbar ist und das Transportklinkenteil (20) elastisch ausfedernd ausgebildet ist zum ratschenatigen Eingriff in die Zahnleisten (23, 24). Um in gebrauchsvorteilhafter Weise die Schrittverstellung des Druckbodens handhabungsgünstig für den Einsatz einer Ersatzkartusche auszubilden, schlägt die Erfindung vor, daß das Transportteil (4) relativ zu dem Gehäuse (3) verdrehbar ist unter Distanzierung der stirnseitig einander zugekehrten Zahnleisten (23, 24) in Umfangsrichtung.

FIG.3

EP 0 419 967 A1

## SPENDER

Die Erfindung bezieht sich auf einen Spender zur portionierten Ausgabe pastöser Massen oder dergleichen, mit einem rohrartigen Gehäuse, einem Druckboden und einem außerhalb desselben angeordneten Transportteil zum Transport der in einem Kartuschensack befindlichen pastösen Masse in Richtung einer Ausgabeöffnung, wobei der Druckboden mindestens ein Transportklinkenteil aufweist, das einerseits mit einer an dem Gehäuse ausgebildeten, axial verlaufenden Zahnleiste und andererseits mit einer an dem Transportteil ausgebildeten, gleichfalls axial verlaufenden Zahnleiste zusammenwirkt, wobei weiter das Transportteil gegen eine Federkraft relativ zu dem Gehäuse axial bewegbar ist und das Transportklinkenteil elastisch ausfedernd ausgebildet ist zum ratschenden Eingriff in die Zahnleisten.

Ein beispielsweise zur Ausgabe gleichgeformter Teile wie Tabletten dienender Spender dieser Art ist durch die FR-OS 2 489 267 bekannt. Dort steht der Innenraum des Spenders zufolge peripherer Anordnung der festen und beweglichen Zahnleisten der Transporteinrichtung -gegenüber den klassischen Transporteinrichtungen, wie beispielsweise durch die US-PS 1 212 010 bekannt- voll für das Ausgabegut zur Verfügung. Die Transporteinrichtung des letztgenannten Spender verwendet eine zentrale Schubstange, an der sich der Druckboden über ein im Rücken desselben liegendes Klemmgesperre hubbedingt in Ausgaberichtung bewegt. Die intermittierend bewegte Schubstange nimmt in axialer Richtung nahezu den gesamten Vorratsraum des Spenders ein. Diese Ausgestaltung könnte beispielsweise nicht für die Ausgabe einer Reihe Tabletten üblicher Gestalt Anwendung finden bzw. eine umschlossene Abmessung pastösen Gutes.

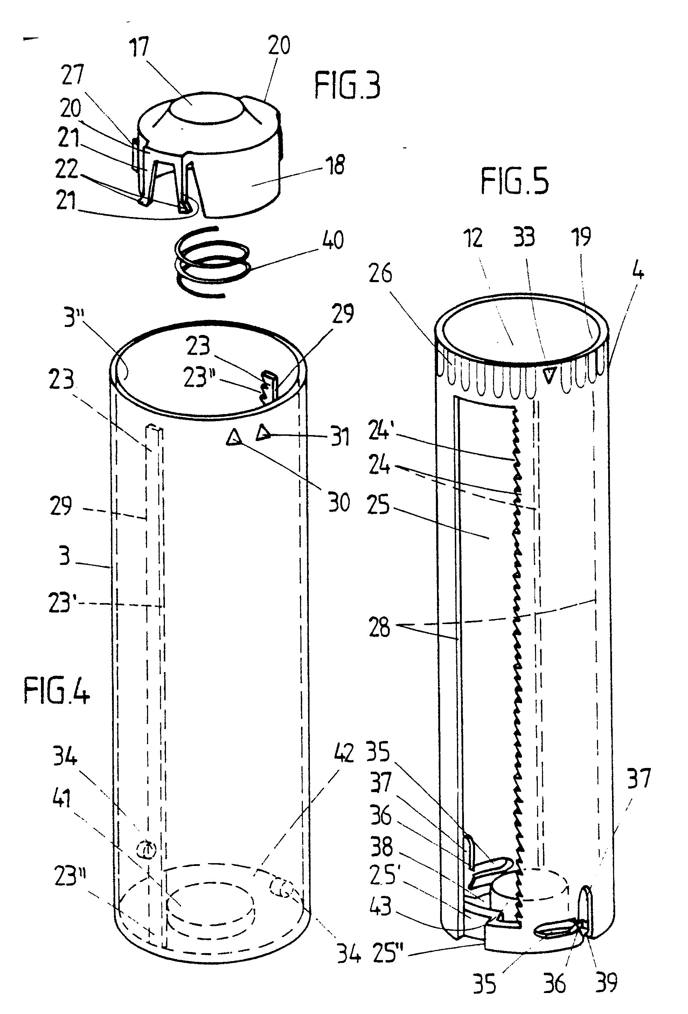

Durch die US-PS 1 975 545 ist sodann ein Spender bekannt, der mit der klassischen Tube schraubtechnisch verbindbar ist. Gemäß dortiger Variante Fig. 4 wird ein über eine zentrale Stange betätigbarer Kolben so in eine der Ausgabeöffnung entfernte Position gefahren, daß sich der Inhalt der schraubtechnisch zugeordneten, kollabierbaren Tube in den Spenderraum einsaugt. Der Spenderkopf weist sodann eine Pumpeinrichtung auf, die den Inhalt durch schrittweisen Hub des als Nachlaufkolben fungierenden Kolbens dosiert ausbringt. Um den entsprechenden Nachfüllprozeß durch Aussaugen der nächsten Tube zu ermöglichen, greift das der Ausgabeöffnung entfernte Ende der Stange schlüsselartig in eine entsprechende Öffnung des Nachlaufkolbens ein. Durch Verdrehen der Stange liegt die Mitnahmbereitschaftsstellung vor, so daß die vorgezogene Stange nun unter Mitnahme des Nachlaufkolbens diesen wieder in die Ausgangsposition schleppt.

Durch die US-PS 3 178 076 ist es schließlich bekannt, eine gezahnte Transportstange eines Spenders um ihre geometrische Achse um 90° zu verstellen, so daß der Zahnleisteneingriff mit einer Sperrklinke eines Druckbodens aufgehoben wird.

Aufgabe der Erfindung ist es, einen gattungsgemäßen Spender in herstellungstechisch einfacher, gebrauchsvorteilhafter Weise so auszubilden, daß ohne Verzicht auf die bewährte Schrittverstellung des Druckbodens handhabungsgünstig und laienfreundlich eine Neubestückung des Spenders nach dem Ersatzkartuschen-Prinzip ermöglicht wird.

Gelöst ist diese Aufgabe durch die im Anspruch 1 angegebene Erfindung.

Die Unteransprüche sind vorteilhafte Weiterbildungen des gattungsgemäßen Spenders.

Zufolge solcher Ausgestaltung ist ein gattungsgemäßer Spender erhöhten Gebrauchswert erzielt: Die handhabungs- und bestückungsfreundliche Ausbildung desselben gibt einen wirksamen Anreiz, die Einwegbenutzung entsprechender Spender mehr und mehr einzuschränken bzw. sogar aufzugeben, so daß den umweltbezogenen Bestrebungen zunehmend besser Rechnung getragen wird. Völlig ohne die Notwendigkeit beispielsweise einer Zerlegung des Spenders läßt sich im Handumdrehen der neue Kartuschensack zuordnen, auch hier unter Nutzung des Vorteils der Kollabilität solcher Sackkartuschen. Das Müllvolumen wird erheblich reduziert. Konkret ist so vorgegangen, daß das Transportteil relativ zu dem Gehäuse verdrehbar ist unter Distanzierung der stirnseitig einander zugekehrten Zahnleisten in Umfangsrichtung. Unter Nutzung des großen, nicht durch Funktionsteile durchsetzten Innenraumes des Spenders kann der nächste Kartuschensack bequem eingeführt werden, wobei die Einführbewegung genutzt wird für das Zurückschieben des Druckbodens in seine Ausgangsstellung, der durch Verdrehen des Transportteils sich außer Kupplungseingriff mit den Transportmitteln befindet. Dabei bringt dies nicht einmal eine Einschränkung in der Gestaltung, da für die äußeren Bauteile durchaus unrunde Querschnitte angewandt sein können, wenn man nicht die maximale Ausnutzung beispielsweise durch eine zylindrische Spenderform anstreben möchte. Die entsprechende Drehbewegung des mitnahmeaktiven Transportteils bringt auch keine Überstand von Funktionsteilen, wie dies beispielsweise beim Gegenstand gemäß US-PS 1 975 545 hingenommen werden muß. Auch ein Zerlegen gemäß US-PS 3 178 076 ist nicht nötig. In vorteilhafter Weiterbildung wird sodann vorgeschlagen, daß der Druckbo den einen Führungsfinger aufweist und das Transportteil eine axial verlaufende Anschlagleiste zur Mitnahme des Druckbodens in Umfangsrichtung bei einer Drehbewegung des Transportteils. Es ist also nicht auf einen vagen Reibungsschluß gesetzt; vielmehr liegt eine betriebssichere Dreh-Mitnahme des Druckbodens vor. Weiter erweist es sich als vorteilhaft, daß in der Distanzierungsstellung der Zahnleiste die axiale Beweglichkeit des Transportmittels relativ zu dem Gehäuse gesperrt ist. Es liegt dabei in der Endstellung grundsätzlich die betriebsgerechte Entkupplung des Druckbodens vor, welche Stellung auch beim axialen Zurückschieben des Kolbens nicht veränderbar ist. Um eine definierte Betätigungs-und Sperrgrundstellung zu erhalten, wird weiter so vorgegangen, daß an dem Gehäuse ein Führungsnocken angeordnet ist, der in der Distanzierungsstellung in einen horizontal sich erstreckenden Schlitz in dem Transportteil eingefahren ist. Dieser horizontale, also senkrecht zur Axialen des Spenders liegende Schlitz sperrt wirksam die Relativbewegung des Transportteils zum Gehäuse hin, so daß zufällige Berührungen der Betätigungsfläche des Spenders nicht in eine Hubbewegung im Sinne der ungewollten Ausgabe umgesetzt werden können. Die Axialbewegung ist auch gegenüber größeren mechanischen Belastungen blockiert. Es bedarf schon der willensbetonten Herbeiführung der Betätigungsbereitschaftsstellung durch Verlassen des horizontal sich erstreckenden Schlitzes. Weiter erweist es sich diesbezüglich als günstig, daß am Eingang des Schlitzes eine überwindbare Raststelle ausgebildet ist. Letztere zeigt dem Benutzer eindeutig an, ob diese oder die andere Extremstellung im Zuge der Drehbewegung erreicht ist. Die Rastbewegung kann sogar akustisch wahrgenommen werden. Darüber hinaus ergibt sich eine vorteilhafte Weiterbildung dadurch, daß eine axiale Führung des Transportteils in dem Gehäuse als Vertikal schlitz ausgebildet ist. Ein solcher Vertikalschlitz mag zugleich zur Betätigungs-Hubbegrenzung herangezogen werden, so daß dem Führungsnocken somit eine Zusatzfunktion zukommt. Da die ensprechenden Bewegungen aneinander anschließen, liegt eine sinnvolle Kulissenführung dadurch vor, daß der Schlitz und der Vertikalschlitz rechtwinklig zueinader angeordnet sind unter Ausbildung eines zusammenhängenden, bajonettartigen Fahrweges für den Führungsnocken. In der Grundstellung befindet sich dieser im Bereich des unteren Endes des Vertikalschlitzes. Darüber hinaus wird vorgeschlagen, daß ein Transportklinkenteil aus zwei umfangsmäßig gegensinnig orientierten Rastfingern besteht, von denen jeweils einer mit der Zahnleiste am Gehäuse und einer mit der Zahnleiste am Transportteil zusammenwirkt. Entsprechend ist die Zahnung der Zahnleisten in Umfangsrichtung gleichsinnig orientiert, d. h. gegeneinander gerichtet; es findet also nicht ein radial orientierter Verzahnungseingriff statt gemäß gattungsbildender FR-OS 2 489 267, wo auch kein Freigabehub der Kupplung und Entkupplung vorgesehen ist. Um zu einer ausgewogenen Belastung des Druckbodens zugelangen, wird weiter vorgeschlagen, daß zwei Transportklinkenteile an dem Druckboden um 180 versetzt angeordnet sind. An einem Spender der aufgezeigten Gattung erweist es sich sodann als vorteilhaft, daß ein oberes Ende des Kartuschensakkes durch eine Kopfplatte mit angeformter Tülle die Sackwandung des Kartuschensakkes stabilisiert, wobei die Kopfplatte zugleich die Betätigungsfläche des Spenders ausbildet. Weiter ist ein Kartuschensack für einen Spender gemäß den Ansprüchen 1 bis 9 in vorteilhafter Weise so ausgebildet, daß ein oberes Ende des Kartuschensackes durch eine Kopfplatte mit angeformter Tülle die Sackwandung des Kartuschensakkes stabilisiert, wobei die Kopfplatte zugleich die Betätigungsfläche des Spenders ausbildet. Darüber hinaus erweist es sich als günstig, daß die Kopfplatte mit der Tülle als Einsatzteil eines oberen Stabilisierungsringes des Kartuschensackes ausgebildet ist. Der Stabilisierungring sichert die Offenhaltung des kollabierbaren Sackgebildes. Zusammen mit der Kopfplatte ergibt sich so auch eine gute Anfassmöglichkeit beim Einsenken des Sackes in den Aufnahmeraum des Spenders. Vorteilhaft ist das Einsatzteil aus einem kreisförmigen, nach oben offenen U-Profil gebildet. Dadurch entstehen besonders stabile Verhältnisse. Schließlich erweist es sich noch als günstig, daß ein Kopfplattenrand das Einsatzteil, auf einem oberen Rand desselben aufliegend, radial überragt. Das schafft eine Auflage-Ringschulter und bringt zudem eine Untergreiffläche für das sichere Halten des Kartuschensackes beim Manövrieren, d. h. Einführen und Abziehen.

Der Gegenstand der Erfindung ist nachstehend anhand eines zeichnerisch veranschaulichten Ausführungsbeispieles näher erläutert. Es zeigt:

Fig. 1 den erfindungsgemäßen Spender in Grundstellung bei zur Freilegung des Spenderkopfes abgehobener Schutzkappe, alles in Perspektive,

Fig. 2 einen Abschnitt des Gehäuses, aufgebrochen, unter Freilegung der Sicht auf die Details der Transporteinrichtung,

Fig. 3 den Druckboden in perspektivischer Einzeldarstellung,

Fig. 4 das Gehäuse in perspektivischer Einzeldarstellung,

Fig. 5 das Transportteil in perspektivischer Einzeldarstellung,

Fig. 6 einen Vertikalschnitt durch einen zugehörigen Kartuschensack, und zwar in gefülltem Zustand,

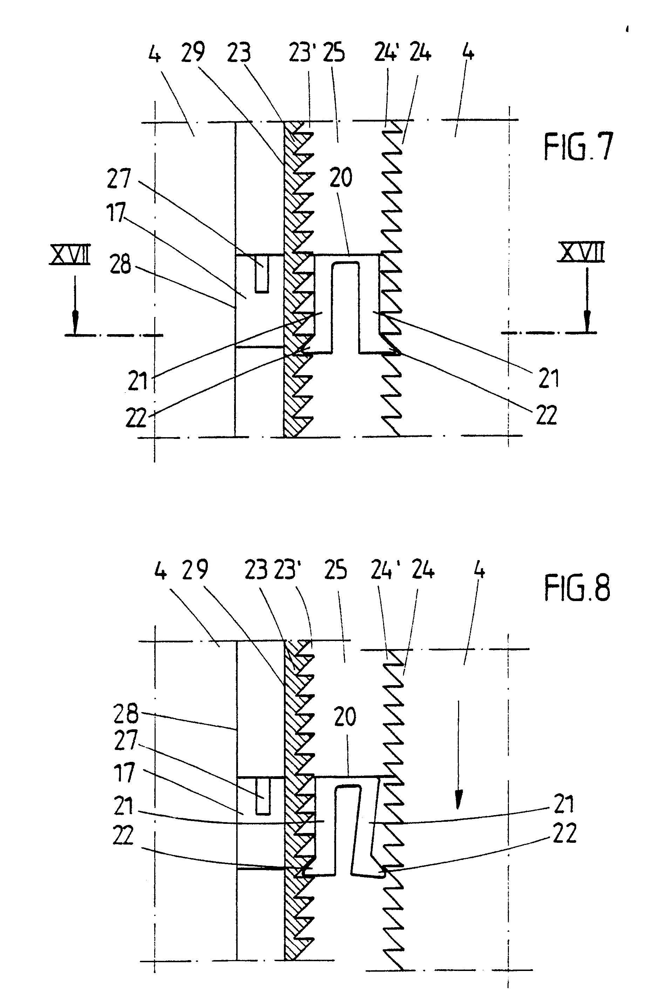

Fig. 7 wiederum einen Ausschnitt der Transporteinrichtung, und zwar aufgebrochen und in Grundstellung,

Fig. 8 eine gleiche Darstellung in Betätigungsstellung bei beginnender Abwärtsbewegung des Transportteiles,

Fig. 9 das Ende der Abwärtsbewegung des Transportteiles,

Fig. 10 den Beginn der federveranlaßten Aufwärtsbewegung des Transportteils,

Fig. 11 die erreichte neue Grundstellung nach Durchlaufen eines vollen Betätigungshubes,

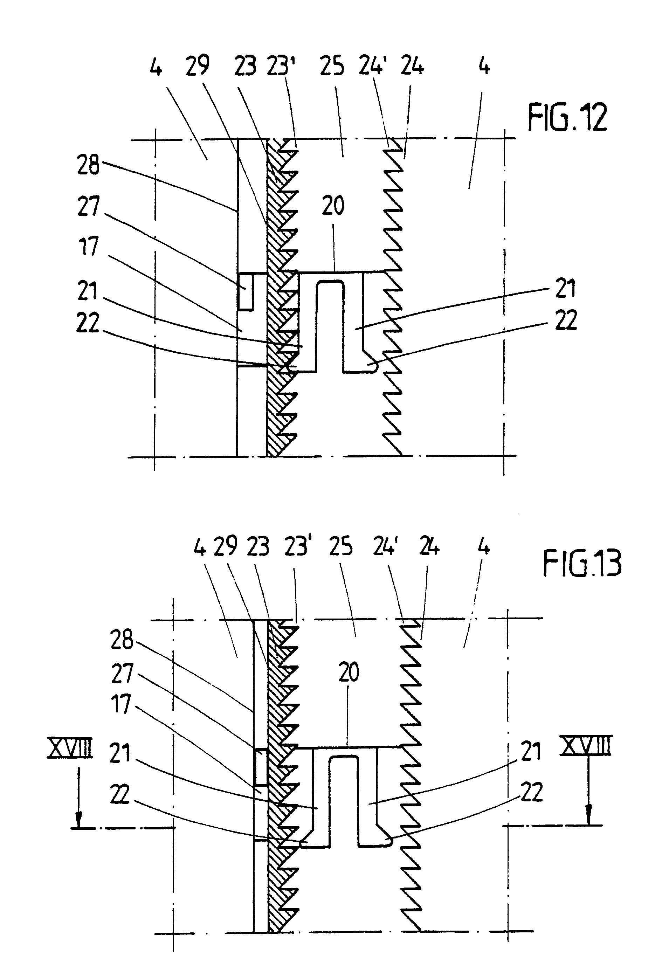

Fig. 12 das Verdrehen des Transportteiles in Richtung der Freigabestellung des Druckbodens, und zwar kurz vor dem vollständigen Entkuppeln des Transportklinkenteils,

Fig. 13 die völlige Freigabe des Transportklinkenteils, in welcher Stellung nun das freie Zurückführen des Druckbodens möglich ist durch Einsetzen eines neuen Kartuschensackes (normalerweise ist dabei die maximale Hochstellung des Druckbodens erreicht, jedoch nicht dargestellt),

Fig. 14 die Lage des Führungsnockens in der Betätigungs-Grundstellung,

Fig. 15 die Lage des Führungsnockens in der Füllstellung,

Fig. 16 einen Vertikalschnitt durch den Spender im Bodenbereich, und zwar in der Grundstellung,

Fig. 17 den Schnitt gemäß Linie XVII-XVII in Fig. 7,

Fig. 18 den Schnitt gemäß Linie XVIII-XVIII in Fig. 13,

Fig. 19 den Schnitt gemäß Linie XIX-XIX in Fig. 14 und

Fig. 20 den Schnitt gemäß Linie XX-XX in Fig. 15.

Der als Ausführungsbeispiel beschriebene und dargestellte Spender Sp dient zur Ausgabe pastöser Masse 1. Diese wird in einem Kartuschensack 2 bereitgehalten. Nach Entleeren und Entfernen eines solchen Kartuschensackes 2 kann ein neuer Kartuschensack 2 in den Spender Sp eingesetzt werden.

Die diesbezügliche Zuordnung geschieht vom oberen Ende des als Standgerät ausgebildeten Spenders Sp her. Bodenseitig ist dieser verschlossen.

Bestandteile des Spenders Sp sind ein längliches Gehäuse 3 und ein darin geführt eingesetztes, axial anschlagbegrenztes Transportteil 4. Letzteres steht in Grundstellung des Spenders mindestens um das Maß eines Dosier-Betätigungshubes x über den oberen, ebenen Stirnrand 3′ des Gehäuses 3 über. Dieser gesamte überstehende Abschnitt bildet den sogenannten Spenderkopf 5.

Funktionaler Bestandteil des Spenderkopfes 5 bildet sodann eine den bodenseitig geschlossenen Kartuschensack 2 oben, also im Bereich des oberen Endes 2′ desselben liegende Kopfplatte 6, deren Oberseite zugleich als Betätigungsfläche 7 des Spenders Sp dient.

Der Kopfplatte 6 ist eine sich zur Seite hin ansteigend erhebende Tülle 8 angeformt. Deren Ausgabeöffnung 9 verschließt ein Stopfen 10.

Kopfplatte 6 und Tülle 8 sind als Einsatzteil E eines oberen Stabilisierungsringes 11 des Kartuschensackes 2 realisiert. Der Stabilisierungsring 11 ist U-profiliert. Die Mantelwand seines äußeren, nach oben gerichteten U-Schenkels a ist in der unteren Hälfte abgesetzt. Er nimmt dort die Sackwandung W des oberen Endes 2′ des Kartuschensackes 2 so auf, daß diese beispielsweise ebenengleich mit der besagten Mantelwand abschließt, also bei der Steckzuordnung in den Aufnahmeraum 12 des Spenders Sp respektive des Transportteils 4 nicht beschädigt bzw. beim Herausziehen nicht abgestreift wird bzw. bremsend wirkt.

Der andere, nach oben gerichtete U-Schenkel b des kreisförmigen U-Profils bildet einen Steckschacht 13 für einen von der Innenseite der Decke der domartig gestalteten Kopfplatte 6 ausgehenden Rohrstutzen 14.

Die Steckbegrenzung beider Teile zueinander ergibt sich dadurch, daß ein nach unten gerichteter Kopfplattenrand 6′ des Einsatzteiles E auf den korrespondierenden oberen Rand 11′ des Stabilisierungsringes 11, genauer gesagt seines U-Schenkels a satt aufsetzt. Die Steckverbindung ist in Preßsitzqualität realisiert, so daß besondere Verbindungsmittel wie Kleber etc. entbehrlich sind.

Bezüglich des Kopfplattenrandes 6′ ist darauf geachtet, daß dieser die Mantelwand des Stabilisierungringes 11 nach außen hin überragt. Der Überstand enspricht etwa der halben Wandungsdicke der Kopfplatte 6 bzw. des Kopfplattenrandes 6′. Die sich ergebende radiale Überstandsschulter ist mit 15 bezeichnet. Sie definiert zusammen mit dem korrespondierenden Stirnrand 4′ des Transportteils 4 Einhangtiefe des Kartuschensackes 2 in den Aufnahmeraum 12 des Spenders.

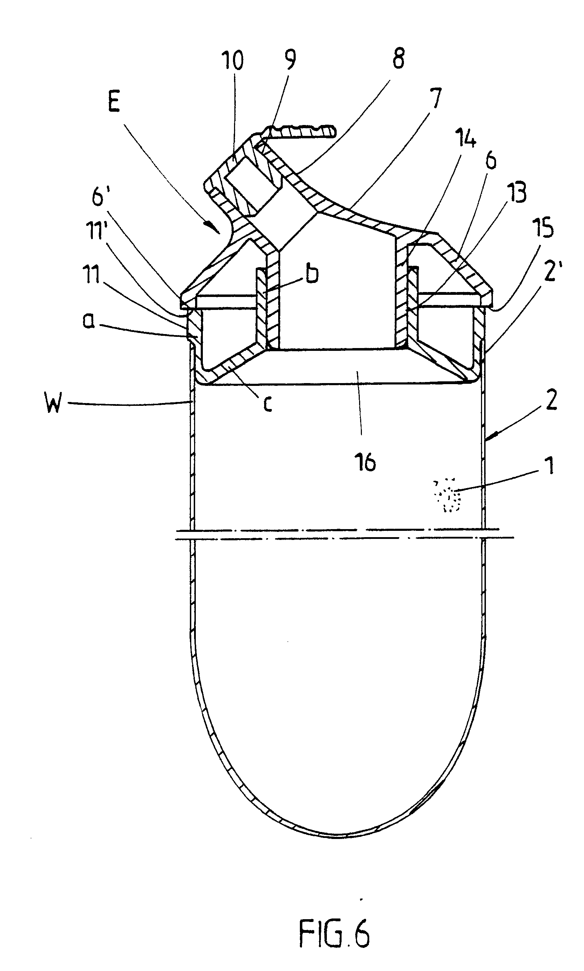

Wie Fig. 6 entnehmbar, setzt sich der einen zentralen Durchströmweg bildende Innenraum des Rohrstutzens 14 in den Kanal der Tülle 8 fort.

Der Steg c des rotationssymmetrischen U-Profils des Ringes 11 steigt zum Zentrum hin an. Hierdurch entsteht ein sich zum Rohrstutzen 14 hin verjüngender Trichter 16, dessen breitere Basis dem Innendurchmesser des Kartuschensackes 2 entspricht. Die Reduzierung geht etwa auf das Maß des Radius' zurück. Ein solcher Trichter 16 bringt eine ausgewogene, gleichberechtigte Zuführung der Masse 1 in den sich stufenweise verengenden Ausgabeweg.

Die Ausbringung der pastösen Masse 1 geschieht durch eine Transporteinrichtung, zu der außer dem bereits erwähnten Transportteil 4 auch das Gehäuse 3 gehört sowie ein im Aufnahmeraum 12 des Spenders Sp angeordneter Druckboden 17. Letzterer ergibt sich besonders deutlich aus Fig. 3. Es handelt sich um ein im Grunde topfförmiges Bauteil, jedoch mit partiell unterbrochener zylindrischer Topfwandung 18. Letztere führt sich verkippungsfrei an der ebenfalls zylindrischen Innenwandung 19 des im Grunde hülsenförmige gestalteten Transportteils 4.

Über besagte Topfwandung 18 radial hinausragend bildet der Druckboden 17 ein Transportklinkenteil 20 aus. Das besteht aus zwei umfangsmäßig gegensinnig orientierten, frei federnden Rastfingern 21. Letztere erstrecken sich in vertikaler Richtung nach unten gerichtet, und zwar im wesentlichen parallel zueinander verlaufend, und wurzeln etwa auf Höhe der Decke des topfförmig gestalteten Druckbodens 17, d. h. die überwiegende Länge ist als Freistandszone realisiert. Im Bereich der besagten Transportklinken 20 ist die Topfwandung 18 unterbrochen, was vor allem spritztechnischen Vorteil hat; der Druckboden besteht aus flexiblem Kunststoffmaterial.

Dem Druckboden 17 sind zwei gleichgestaltete Transportklinkenteile 20 angeformt, und zwar in diametraler Gegenüberlage, d. h. also um 180° versetzt. Die voneinander wegweisenden Rastzähne der Rastfinger 21 tragen durchweg das Bezugszeichen 22.

Der Rastzahn 22 des einen Rastfingers 21 wirkt mit einer Zahnleiste 23 des Gehäuses 3, der andere, in Gegenrichtung weisende Rastzahn 22 mit einer Zahnleiste 24 des Transportteils 4 zusammen. Deren Rastzahnlücken 23' bzw. 24' sind also räumlich in Umfangsrichtung gegeneinander gerichtet. Während die Rastzahnlücken 24' der Zahnleiste 24 in der Ebene der Wandung des hülsenförmigen bzw. zylindrischen Transportteils 4 liegt, ist die Zahnleiste 23 des Gehäuses 3 aufgesetzt, d. h. sie sitzt auf der zylindrischen Innenwand 3" des Gehäuses 3, so daß die Zahnleisten 23,24 in einer gemeinsamen Umfangsebene verlaufen. Sämtliche Zahnleisten erstrecken sich raumparallel zur Längsmittelachse y-y des Spenders Sp.

Alle Zahnleisten 23,24 besitzen Sägezahnstruktur, d. h. die eine Zahnflanke erstreckt sich in einer senkrechten bzw. horizontal liegenden Ebene zur besagten Längsmittelachse y-y, während die andere Flanke schräg zur besagten Zahnflanke steht. Der Schrägungsverlauf ist von der Zahnspitze ausgehend jeweils nach links unten bzw. rechts unten gerichtet.

Die beiden Transportklinkenteile 20 ragen in einen in Umfangsrichtung gegebenen, schachtartigen, ebenfalls in Längsrichtung des Spenders verlaufenden Schacht 25. Dieser ist in Querrichtung veränderbar. Erreicht wird dies dadurch, daß das Transportteil 4 relativ zu dem Gehäuse 3 verdrehbar gelagert ist unter Distanzierung der stirnseitig einander zugekehrten Zahnleisten 23,24 in Umfangsrichtung. Zur erleichterten Durchführung der entsprechenden, anschlagbegrenzten Drehbewegung weist der um den Hubabstand x überstehende, obere Abschnitt des Transportteils 4 eine Rauhung auf, beispielsweise in Form einer Axialriefung 26.

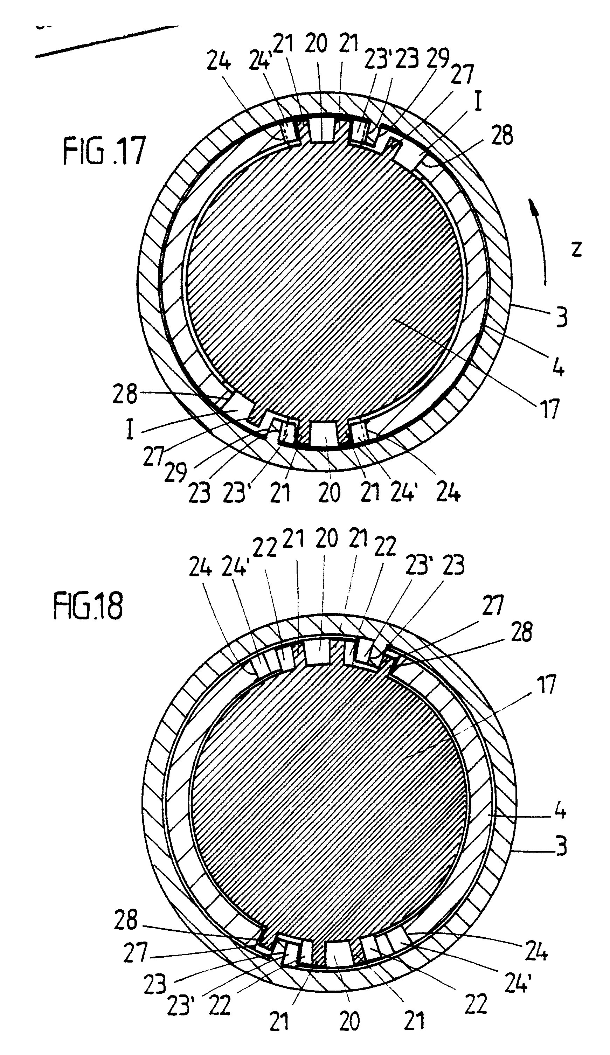

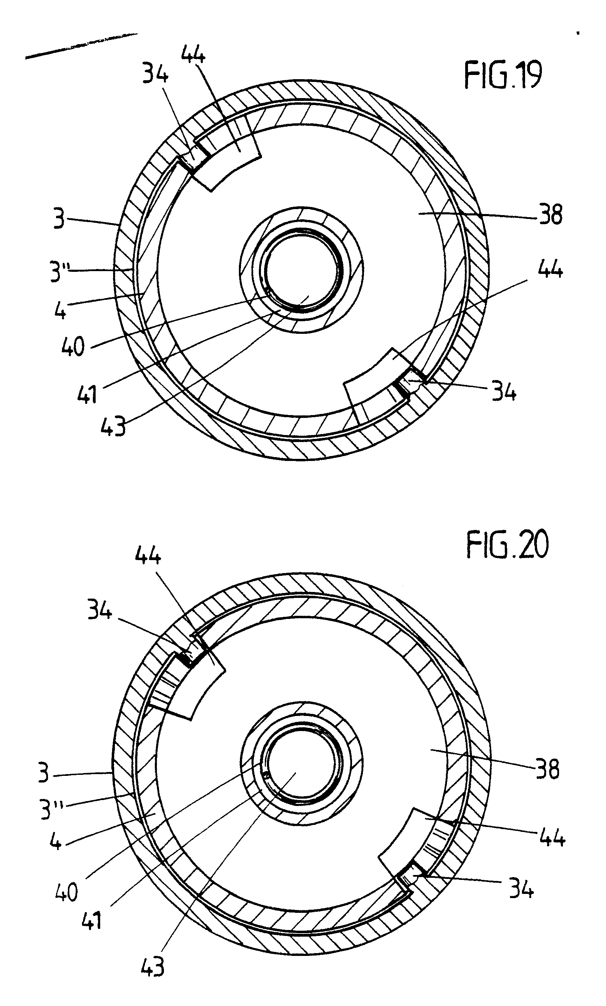

Um ein exaktes Ausklinken der Transportmittel zu erzielen, wird die Drehbewegung in eine entsprechende Zwangssteuerung des Druckbodens 17 umgesetzt. Der Druckboden 17 weist dazu einen Führungsfinger 27 auf. Entsprechend der paarigen Ausbildung der Steuereinrichtung, sind zwei solcher, von der Topfwandung 18 des Druckbodens 17 radial auswärts ausgehender Führungsfinger 27 realisiert, und zwar ebenfalls an diametral einander gegenüberliegenden Stellen. Die Führungsfinger 27 reichen, wie aus den Figuren 17 und 18 erkennbar, bis in die Ebene des Schachtes 25 bzw. der Schächte 25.

Der Führungsfinger 27 steht in Wirkverbindung zu einer axial verlaufenden Anschlagleiste 28, welche den Druckboden 17 in Umfangsrichtung bei der Drehbewegung des Transportteiles 4 mitschleppt. Es wird auf Fig. 17 verwiesen. Dort befindet sich der Führungsfinger 17 in Freistandslage. Unter Drehen des Transportteils 4 in Richtung des Pfeiles z nähert sich die Anschlagleiste 28 dem Führungsfinger 27. Der entsprechende radiale Drehwinkel-Abstand I entspricht mindestens der Zahntiefe der Zahnleisten 23 bzw. 24. Dies bedeutet, daß auf diesem Wege vorrangig die Zahnleiste 24 von dem einen korrespondierenden Rastfinger 21 wegbewegt wird unter Aufgabe des diesbezüglichen Rasteingriffes. Das Weiterdrehen des Transportteils 4 in der besagten Pfeilrichtung z führt sodann dazu, daß die Anschlagleiste 28 nun gegen den Führungsfinger 27 fährt und diesen in der besagten Richtung mitschleppt, der sodann mit seiner anderen Flanke gegen die vom Rücken der ortsfesten Zahnleiste 23 des Gehäuses 3 gebildeten Anschlagleiste 29 fährt. Die vorherige Abstandslage des Führungsfingers 27 zur korrespondierenden Anschlagleiste 29 entspricht mindestens der Zahntiefe der Zahnleiste 23, aus der dann folglich der zugehörige Rastfinger 21 austritt.

Es liegt nun die in Fig. 18 dargestellte Freigabestellung vor; der Druckboden 17 kann daher unbehindert aus seiner kopfstücknahen Endstellung in die bodennahe Ausgangsstellung geschoben werden, was, wie einleitend schon angedeutet, durch Einsenken des neuen Kartuschensackes 2 erfolgt.

Danach braucht das Transportteil 4 lediglich wieder entgegen der Richtung des Pfeiles z bewegt zu werden, um die funktionsgerechte Ausgangsposition wieder zu gewinnen.

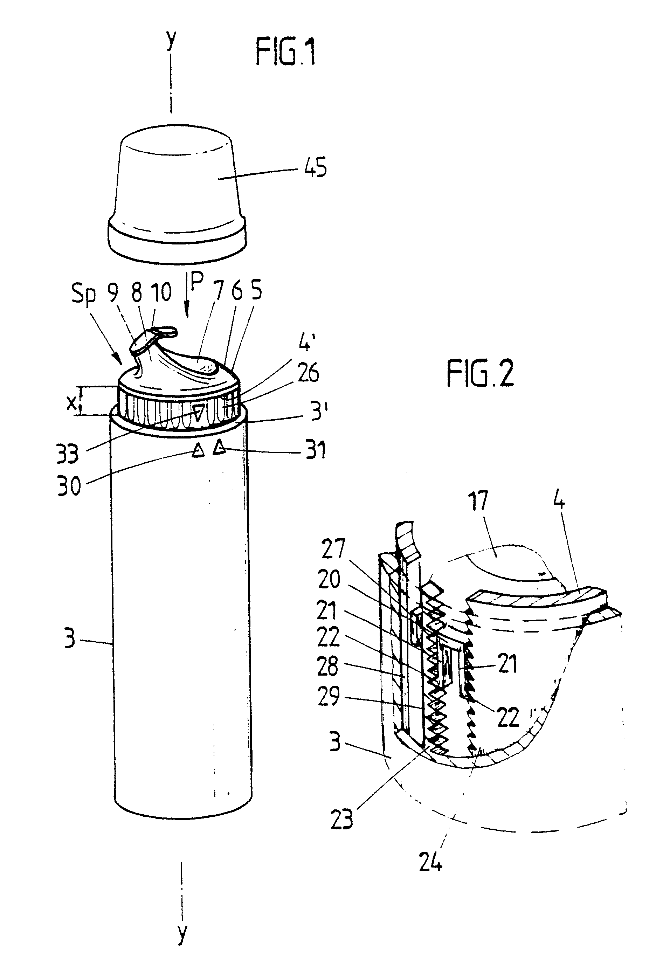

In der Distanzierungsstellung der Zahnleisten 23,24 (vergl. Fig. 18) ist die axiale Beweglichkeit des Transportteiles 4 relativ zum Gehäuse 3 gesperrt. Die entsprechende Sperrstellung kann bei jeder Höhenlage des Druckbodens herbeigeführt werden. Um die jeweilige Position auch augenfällig zu machen, sind an der Mantelwand des Gehäuses 3 zwei Marken vorgesehen, bezeichnet mit 30 und 31 (Fig. 1). Diesen steht am beweglichen Teil, dem Transportteil 4 nämlich, eine Gegenmarke 33 gegenüber. Ist diese Gegenmarke in Ausrichtung zur Marke 30 gebracht, so liegt die Spendebereitschaftsstellung vor; tritt dagegen die Gegenmarke 33 unter Drehen des Transportteils 4 in Richtung des Pfeiles z in lineare Gegenüberlage zur Marke 31, so kann das Befüllen des Spenders Sp bewirkt werden.

Kontrolliert wird die entsprechende Veränderung der besagten Positionen durch einen Führungsnocken 34 im bodennahen Bereich des Gehäuses 3. Auch der Führungsnokken 34 befindet sich in zweifacher Ausführung dort. Er geht wie die Zahnleisten 23 von der Innenseite 3" des Gehäuses 3 freistehend aus. Es handelt sich um einen zylindrischen Achsstummel, der senkrecht zur Längsmittelachse y-y radial einwärts ausgerichtet ist. Er reicht bis in die Wandungsebene des Transportteils 4. Er bewegt sich dort in einem horizontal sich erstreckenden Schlitz des Transportteils 4. Seine in dieser Richtung gemessene Länge berücksichtigt mindestens den entsprechenden Drehwinkelbedarf des Transportteils. Eingangsseitig schließt der horizontale Schlitz 35 mit einer überwindbaren Raststelle 36 ab. Die Raststelle 16 ist von zwei von den parallelen, horizontalen Schlitzflanken ausgehenden Nocken gebildet, die etwas übertrieben dargestellt sind.

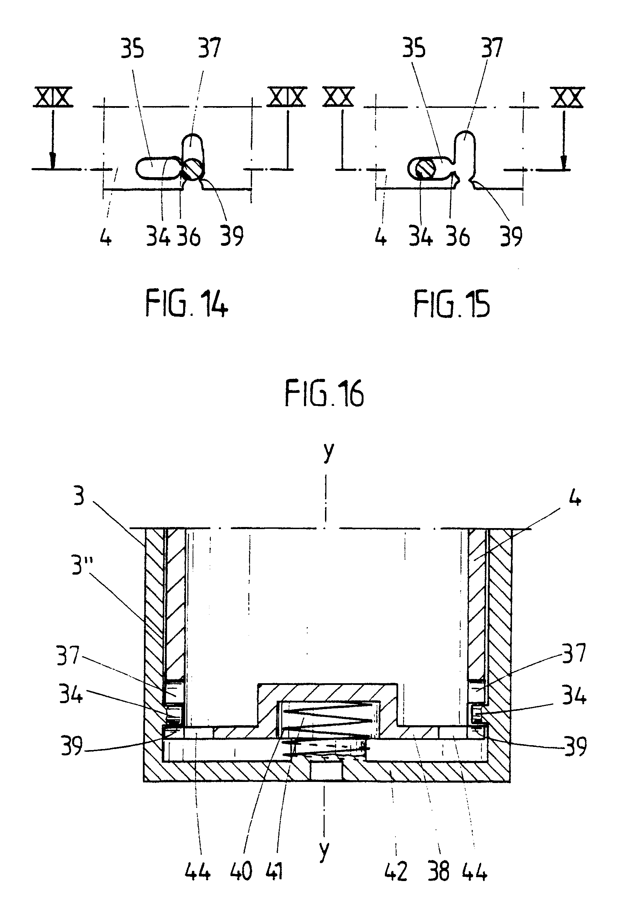

Den eigentlichen Drehwinkel-Begrenzungsanschlag für den Transportteil 4 bildet der bodennahe Abschnitt 23" der Zahnleiste 23, der im entsprechend bemessenen, bodennahen Schachtabschnitt 25' des Transportteils 4 liegt. Die eine Anschlagflanke ist die bereits erwähnte Anschlagleiste 28, die andere eine durch Einrückung der Wandpartie des Transportteils 4 erzielte Gegenflanke 25" desselben. Eintsprechend läßt sich auch die Zahnleiste 23 bei der Montage axial frei überlaufen. Zur axialen Führung des Transportteils 4 ist ebenfalls auf das Mittel der Schlitzung zurückgegriffen, und zwar in Form des aus den Figuren 14 und 15 deutlich erkennbaren Vertikalschlitzes 37. Seine Länge berücksichtigt den Bewegungshub x des Transportteils 4 in axialer Richtung. Schlitz 35 und Vertikalschlitz 37 sind rechtwinklig zueinander angeordnet, wobei der Vertikalschlitz 37 den horizontal verlaufenden Schlitz 35 nach oben hin überragt. Die Raststelle 36 liegt praktisch im Scheitelbereich des so geschaffenen rechtwinkligen Fahrweges für den Führungsnocken 34. Wie den Figuren 14 bis 16 entnehmbar, setzt sich der Vertikalschlitz 37 über den Boden 38 des Transportteils 4 nach unten hin fort, allerdings auch hier unter Belassung einer Raststelle 39 für den Führungsnocken 34. So läßt sich dieser Nocken zugleich als Rast-Fesselungselement 34 für das in das Gehäuse 3 eingeschachtelte Transportteil 4 nutzen und auch in freier Steckverbindung zuordnen. Das Überlaufen der Raststelle 39 ist ebenso merkbar wie das der Raststelle 36, bis hin zu einem akustischen Signal.

Die Rastkraft der Raststelle 39 ist stärker als die Kraft einer das Transportteil in Richtung seiner definierten Grundstellung belastenden Rückholfeder 40, welcher in einer Federkammer 41 (vergl. Fig. 16) zwischen dem Boden 38 und dem Boden 42 des Gehäuses 3 zwischengeschaltet ist. Die untere endständige Federwindung sitzt auf einem bodenseitigen Vorsprung 43 des Gehäuses 3, während sich das obere Ende in der domförmigen, die Federkammer 41 bildenden Ausformung lagenzentrierend abstützt. Es handelt sich um eine Schraubengangdruckfeder.

Im Eintrittsbereich des Vertikalschlitzes 37 weist der Boden 38 eine Ausnehmung 44 aus.

Eine im Wege der Steck- oder Schraubverbindung zuordbare Schutzkappe 45 bildet den oberen Abschluß des Spenders Sp.

Die Funktion ist, kurz zusammengefaßt, wie folgt:

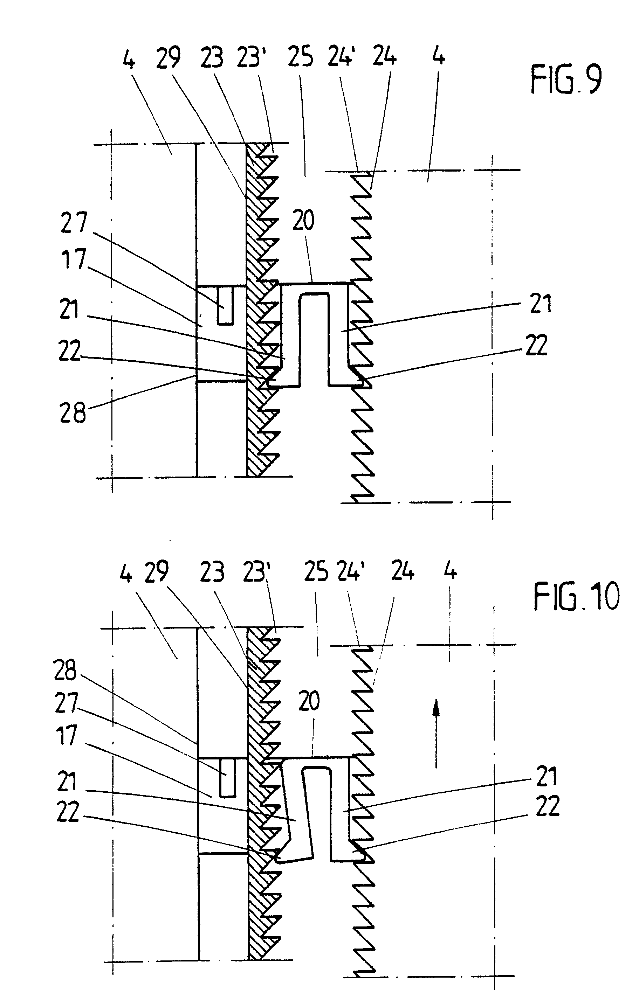

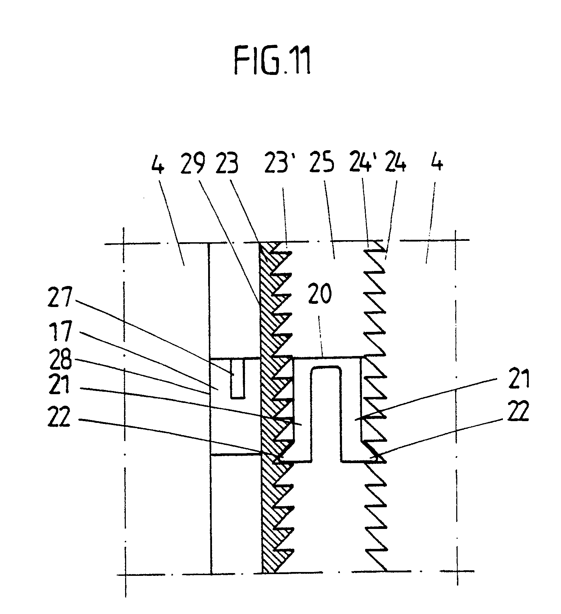

Durch Ausübung einer Druckkraft in Richtung des Pfeiles P wird der überstehende Abschnitt des Transportteils 4 nach unten verlagert. Seine Zahnleiste 24 überratscht dabei den ihr zugekehrten Rastfinger 21. Der andere Rastfinger 21 stützt sich an der steileren Flanke der Zahnleiste 23 des Gehäuses 3 ab. Der Druckboden 17 behält bei dieser Bewegung also seine abgestützte Stellung bei. Dies hat zur Folge, daß das im Kartuschensack 2 verdrängte Gut, und zwar die pastöse Masse 1, über die Ausgabeöffnung 9 stranggeformt austritt. Die entsprechende Bewegung geschieht entgegen der Kraft der Rückholfeder 40. Wird nun der Spenderkopf 5 losgelassen, fährt das Transportteil 4 wieder in seine Grundstellung zurück, jetzt jedoch unter Mitnahme des Druckbodens 17 über seine Zahnleiste 24. Die entsprechende Mitschleppbewegung geht aus Fig. 10 hervor. Der der ortsfesten Zahnleiste 23 zugewandte Rastfinger 21 überratscht dessen Zahnung. Es liegt wieder die abgestützte Stellung gemäß Fig. 11 vor, gemäß welcher der Druckboden 17 seine Höhe in Richtung der Ausgaberichtung um den gewünschten Hub x nachgestellt hat.

Hat der Druckboden 17 seine höchste Stellung erreicht, wird das Transportteil 4 in der erläuterten Weise in die Position Füllen verdreht, und zwar in Richtung des Pfeiles z. Es ergibt sich die Distanzierung unter Freistellung der Transportklinkenteile 20. Nach Entnehmen des leergewordenen Kartuschensacks 2 wird nun eine neuer Kartuschensack 2 eingeführt; dieser Einführbewegung bietet der Druckboden 17 keinen Gegenhalt. Er wird in einer Abwärts-Gleitbewegung reibungsschlüssig nach unten geschoben.

In dieser Stellung kann die Sicherung bzw. die Benutzungsbereitschaftsstellung wieder herbeigeführt werden.

Die in der vorstehenden Beschreibung, der Zeichnung und den Ansprüchen offenbarten Merkmale der Erfindung können sowohl einzeln, als auch in beliebiger Kombination für die Verwirklichung der Erfindung von Bedeutung sein.


ZUSATZBLATT


In die Offenbarung der Anmeldung wird hiermit der Offenbarungsinhalt der zugehörigen/beigeschlossenen Prioritätsunterlagen vollinhaltlich mit eingeschlossen.


**Ansprüche**

1. Spender (Sp) zur portionierten Ausgabe pastöser Massen (1) oder dergleichen, mit einem rohrartigen Gehäuse (3), einem Druckboden (17) und einem außerhalb desselben angeordneten Transportteil (4) zum Transport der in einem Kartuschensack (2) befindlichen pastösen Massen (1) in Richtung der Ausgabeöffnung (9), wobei der Druckboden (17) mindestens ein Transportklinkenteil (20) aufweist, das einerseits mit einer an dem Gehäuse (3) ausgebildeten, axial verlaufenden Zahnleiste (23) und andererseits mit einer an dem Transportteil (4) ausgebildeten, gleichfalls axial verlaufenden Zahnleiste (24) zusammenwirkt, wobei weiter das Transportteil (4) gegen eine Federkraft (Rückholfeder 40) relativ zu dem Gehäuse (3) axial verlagerbar ist und das Transportklinkenteil (20) elastisch ausfedernd ausgebildet ist zum ratschenartigen Eingriff in die Zahnleisten (23,24), dadurch gekennzeichnet, daß das Transportteil (4) relativ zu dem Gehäuse (3) verdrehbar ist unter Distanzierung der stirnseitig einander zugekehrten Zahnleisten (23,24) in Umfangsrichtung.

2. Spender, insbesondere nach Anspruch 1, dadurch gekennzeichnet, daß der Druckboden (17) einen Führungsfinger (27) aufweist und das Transportteil (4) eine axial verlaufende Anschlagleiste (28) zur Mitnahme des Druckbodens (17) in Umfangsrichtung bei einer Drehbewegung des Transportteils (4).

3. Spender, insbesondere nach einem oder mehreren der vorhergehenden Ansprüche, dadurch gekennzeichnet, daß in der Distanzierungsstellung (Fig. 13) der Zahnleisten (23,24) die axiale Beweglichkeit des Transportteils (4) relativ zu dem Gehäuse (3) gesperrt ist.

4. Spender, insbesondere nach einem oder mehreren der vorhergehenden Ansprüche, dadurch gekennzeichnet, daß an dem Gehäuse (3) ein Führungsnocken (34) ausgebildet ist, der in der Distanzierungsstellung (Fig. 13) in einen horizontal sich erstreckenden Schlitz (35) in dem Transportteil (4) eingefahren ist (vergl. Fig. 15).

5. Spender, insbesondere nach einem oder mehreren der vorhergehenden Ansprüche, dadurch gekennzeichnet, daß am Eingang des Schlitzes (35) eine überwindbare Raststelle (36) ausgebildet ist.

6. Spender, insbesondere nach einem oder mehreren der vorhergehenden Ansprüche, dadurch gekennzeichnet, daß eine axiale Führung des Transportteils (4) in dem Gehäuse (3) als Vertikalschlitz (37) ausgebildet ist.

7. Spender, insbesondere nach einem oder mehreren der vorhergehenden Ansprüche, dadurch gekennezeichnet, daß der Schlitz (35) und der Vertikalschlitz (37) rechtwinklig zueinander angeordnet sind unter Ausbildung eines zusammenhängenden Fahrweges für den Führungsnocken (34).

8. Spender, insbesondere nach einem oder mehreren der vorhergehenden Ansprüche, dadurch gekennzeichnet, daß ein Transportklinkenteil (20) aus zwei umfangsmäßig gegensinnig orientierten Rastfingern (21) besteht, von denen jeweils einer mit der Zahnleiste (23) des Gehäuses (3) und einer mit der Zahnleiste (24) des Transportteils (4) zusammenwirkt.

9. Spender, insbesondere nach einem oder mehreren der vorhergehenden Ansprüche, dadurch gekennzeichnet, daß zwei Transportklinkenteile (20) an dem Druckboden (17) um 180° versetzt angeordnet sind.

10. Spender nach den Ansprüchen 1 bis 10, dadurch gekennzeichnet, daß ein oberes Ende (2') des Kartuschensacks (2) durch eine Kopfplatte (6) mit angeformter Tülle (8) die Sackwandung (W) des Kartuschensackes (2) stabilisiert, wobei die Kopfplatte (6) zugleich die Betätigungsfläche (7) des Spenders (Sp) ausbildet.

11. Kartuschensack, insbesondere für einen Spender (Sp) nach einem oder mehreren der vorhergehenden Ansprüche, dadurch gekennzeichnet, daß ein oberes Ende (2') des Kartuschensacks (2) durch eine Kopfplatte (6) mit angeformter Tülle (8) die Sackwandung (W) des Kartuschensakkes (2) stabilisiert, wobei die Kopfplatte (6) zugleich die Betätigungsfläche (7) des Spenders (Sp) ausbildet.

12. Kartuschensack nach Anspruch 11, dadurch gekennzeichnet, daß die Kopfplatte (6) mit der Tülle (8) als Einsatzteil (E) eines oberen Stabilisierungsringes (11) des Kartuschensackes (2) ausgebildet ist.

13. Kartuschensack, insbesondere nach einem oder mehreren der vorhergehenden Ansprüche 11,12, dadurch gekennzeichnet, daß das Einsatzteil (E) aus einem kreisringförmigen, nach oben offenen U-Profil besteht.

14. Kartuschensack, insbesondere nach einem oder mehreren der vorhergehenden Ansprüche 11 bis 13, dadurch gekennzeichnet, daß ein Kopfplattenrand (6') des Einsatzteils (E), auf einem oberen Rand (11') desselben aufliegend, diesen radial überragt.

15. Kartuschensack, insbesondere nach einem oder mehreren der vorhergehenden Ansprüche 11 bis 14, dadurch gekennzeichnet, daß die unstabilisierte Sackwandung als Einsteckabschnitt dient, zur relativbewegungsfreien Aufnahme in dem Spender.

FIG.1

FIG.2

FIG.3

FIG.5

FIG.4

FIG.6

EP 0 419 967 A1

FIG.7

FIG.8

FIG.9

FIG.10

# FIG.11

FIG.12

FIG.13

FIG.14

FIG.15

FIG.16

FIG.17

FIG.18

FIG.19

FIG.20

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 248 278 (BRAMLAGE)<br>* Seite 30, letzter Absatz; Figur 303 *<br>----- | 1-14 | B 65 D 83/00 |
| | | | **RECHERCHIERTE SACHGEBIETE (Int. Cl.5)**<br><br>B 65 D |

Der vorliegende Recherchenbericht wurde für alle Patentansprüche erstellt

| Recherchenort | Abschlußdatum der Recherche | Prüfer |
|---|---|---|
| BERLIN | 05-11-1990 | LORENZ P A |